# EUROPÄISCHE PATENTANMELDUNG

(11) **EP 4 123 770 A2**
(43) Veröffentlichungstag der Anmeldung: **25.01.2023**
(21) Anmeldenummer: 22182865.0
(22) Anmeldetag: 04.07.2022
(51) Int. Cl.: H01M 8/04313, H01M 8/04537, H01M 8/2465

(54) **SYSTEM UND VERFAHREN ZUR POSITIONSERKENNUNG EINER VIELZAHL VON KONTAKTMODULEN EINES BRENNSTOFFZELLENSYSTEMS SOWIE BRENNSTOFFZELLENSYSTEM MIT EINEM SOLCHEN SYSTEM**

(30) Priorität: 21.07.2021 DE 102021118846
(71) Anmelder: Marquardt GmbH, 78604 Rietheim-Weilheim (DE)
(72) Erfinder: Waleczek, Henryk, 26316 Varel (DE); Horzella, Jan, 78582 Balgheim (DE)
(74) Vertreter: Staeger & Sperling Partnerschaftsgesellschaft mbB

(57) **Zusammenfassung**

Die Erfindung betrifft ein System zur Positionserkennung einer Vielzahl von Kontaktmodulen (10) zur Kontaktierung einer Vielzahl von zu Gruppen gruppierten Bipolarplatten eines Brennstoffzellensystems, wobei das System die Vielzahl von Kontaktmodulen (10), eine zentrale Steuereinheit (20) und zumindest eine Auswerteeinheit aufweist, wobei die Kontaktmodule (10) jeweils eine Spannungsmesseinrichtung (11) und einen Messwiderstand (12) aufweisen, die Steuereinheit (20) eine elektrische Energiequelle (21) mit einem Bezugspotential (22) aufweist, die Kontaktmodule (10) mit ihren Messwiederständen (12) entlang einer Messleitung (30) in Reihe mit der Energiequelle (21) geschalten sind und eine Reihe von miteinander elektrisch verbundenen Kontaktmodulen (10) bilden und die Spannungsmesseinrichtungen (11) jeweils ausgebildet sind, eine Potentialdifferenz zwischen der Messleitung (30) im Bereich des jeweiligen Kontaktmoduls (10) und dem Bezugspotential (22) zu ermitteln, welche zu der Position des jeweiligen Kontaktmoduls (10) in der Reihe von Kontaktmodulen (10) korreliert, und wobei die zumindest eine Auswerteeinheit ausgebildet ist, aus der von zumindest einer der Spannungsmesseinrichtungen (11) ermittelte Potentialdifferenz eine Position des jeweiligen Kontaktmoduls (10) in der Reihe zu bestimmen

## Beschreibung

Die Erfindung betrifft ein System und ein Verfahren zur Positionserkennung einer Vielzahl von Kontaktmodulen eines Brennstoffzellensystems sowie ein Brennstoffzellensystem mit einem solchen System.

Brennstoffzellensysteme, welche mehrere auch als Zellen bezeichenbare Brennstoffzellen und insbesondere zumindest einen als "Stack" bezeichenbaren Stapel von Brennstoffzellen aufweisen, und insbesondere in Fahrzeugen verwendete Brennstoffzellensysteme weisen typischerweise ein Überwachungssystem auf, welches die Spannungen der einzelnen Brennstoffzellen misst. Wesentlicher Bestandteil dieser Überwachungssysteme ist die Kontaktierung der einzelnen Brennstoffzellen bzw. die Kontaktierung der die einzelnen Brennstoffzellen voneinander trennenden Bipolarplatten.

Zur Kontaktierung der Bipolarplatten und der Messung der Spannung zwischen den einzelnen Brennstoffzellen bzw. zwischen den einzelnen Bipolarplatten werden Kontaktmodule verwendet, welche auch kurz als CVM (Cell-Voltage-Monitoring) bezeichnet werden.

Dabei kontaktiert jedes CVM mehrere Bipolarplatten, wobei in einem Brennstoffzellensystem bzw. für einen Stack meist mehrere CVM vorgesehen sind, welche jeweils eine Gruppe der Bipolarplatten kontaktieren, sodass also die Spannungen zwischen allen Zellen bzw. zwischen den Bipolarplatten durch die CVMs überwachbar sind.

Vor der Inbetriebnahme des Brennstoffzellensystems bzw. des Stacks müssen die CVMs auf deren Position in dem Brennstoffzellensystem und deren Kontaktierung mit den Bipolarplatten überprüft werden. Das ist jedoch vor der Inbetriebnahme des Brennstoffzellensystems problematisch, da zwischen den Bipolarplatten keine für die Positionserkennung notwendige Spannung, anliegt.

Hierfür und für die meist mit der Positionserkennung einhergehende Adressierung der CVMs sind im Stand der Technik verschiedene Verfahren bzw. Systeme bekannt, welche den CVMs beispielsweise über eine Autoadressierung in einem LIN-Bus-System, eine Widerstandskodierung der CVMs oder fest in den CVMs hinterlegte Adressierungen Positionen zuweisen.

Beispielsweise schlägt die Schrift DE 10 2015 224 485 A1 vor, dass ein Master bzw. eine zentrale Steuereinheit den einzelnen CVMs über eine speziell dafür vorgesehene Adressierungsleitung jeweils feste Adressen zuweist, deren Position bzw. deren Zuordnung zu Bipolarplatten jedoch extern bestimmt werden muss, da das System selbst dazu nicht in der Lage ist.

Weiter schlägt die DE 33 47 357 A1 alternativ dazu vor, dass das Brennstoffzellensystem Steckplätze mit einer jeweils festen Steckplatzkennung aufweist und den in die Steckplätze eingesteckten CVMs die Steckplatzkennung als Adresse zugewiesen wird, sodass also über die Steckplatzkennung auch die Position der CVMs bekannt ist.

Nachteilhaft ist also, dass die im Stand der Technik bekannten Systeme entweder vorkonfiguriert bzw. für die Verwendung in einem bestimmten Brennstoffzellensystem ausgelegt sind, sodass diese entsprechend unflexibel und nicht universell verwendbar sind, oder die im Stand der Technik bekannten Systeme eine Positionserkennung durch externe Mittel erfordern, was meist zeit- und kostenintensiv ist.

Der Erfindung liegt deshalb die Aufgabe zugrunde, die vorgenannten Nachteile zu überwinden und ein System zur Positionserkennung einer Vielzahl von Kontaktmodulen bereitzustellen, welches universell einsetzbar ist und eine selbstständige Positionserkennung ohne eine zwischen den Bipolarplatten anliegende Spannung ermöglicht.

Diese Aufgabe wird durch die Merkmalskombination gemäß Patentanspruch 1 gelöst.

Erfindungsgemäß wird ein System zur Positionserkennung einer Vielzahl von Kontaktmodulen (CVMs) zur Kontaktierung einer Vielzahl von zu Gruppen gruppierten Bipolarplatten eines Brennstoffzellensystems vorgeschlagen. Als Positionserkennung ist dabei insbesondere die Erkennung der Reihenfolge der Kontaktmodule zu verstehen, aus welcher die Zuordnung der Kontaktmodule zu den Bipolarplatten ableitbar ist. Entsprechend kann das System auch als Positionserkennungssystem oder System zur Positionserkennung der Kontaktmodule in einer Reihe von Kontaktmodulen zur Kontaktierung einer Vielzahl von zu Gruppen gruppierten Bipolarplatten eines Brennstoffzellensystems bezeichnet werden. Das erfindungsgemäße System weist die Vielzahl von Kontaktmodulen, eine zentrale Steuereinheit und zumindest eine Auswerteeinheit auf. Weiter weisen die Kontaktmodule jeweils eine Spannungsmesseinrichtung und einen als Messwiderstand bezeichneten elektrischen Widerstand auf, welcher als Shunt ausgeführt sein kann. Die Steuereinheit, welche auch als Master bezeichnet werden kann, weist eine elektrische Energiequelle mit einem Bezugspotential auf. Soweit die Steuereinheit als Master bezeichnet wird, können die Kontaktmodule bzw. CVMs als Slaves bezeichnet werden. Die Kontaktmodule sind mit ihren Messwiederständen entlang einer Messleitung in Reihe mit der Energiequelle geschalten und bilden dadurch eine Reihe von miteinander elektrisch verbundenen Kontaktmodulen. Die Spannungsmesseinrichtungen der Kontaktmodule sind jeweils ausgebildet, eine Potentialdifferenz zwischen der Messleitung im Bereich des jeweiligen also des jeweils zu der Spannungsmesseinrichtung gehörenden Kontaktmoduls und dem Bezugspotential zu ermitteln. Da die Spannungsmesseinrichtungen eine Potentialdifferenz zwischen der Messleitung und dem Bezugspotential ermitteln und zwischen zwei Spannungsmesseinrichtungen entlang der Messleitung jeweils (genau) ein Messwiderstand oder zwischen zwei Messwiderständen entlang der Messleitung jeweils (genau) eine Spannungsmesseinrichtung liegt, korreliert die von einer jeweiligen Spannungsmesseinrichtung ermittelte Potentialdifferenz zu einer Position des zugehörigen Kontaktmoduls in der Reihe von Kontaktmodulen. Beispielsweise ist ein Kontaktmodul, dessen Spannungsmesseinrichtung im Vergleich zu den anderen Potentialdifferenzen die geringste Potentialdifferenz ermittelt, das in einer Reihe von Kontaktmodulen erste Kontaktmodul, und ein Kontaktmodul, dessen Spannungsmesseinrichtung im Vergleich zu den anderen Potentialdifferenzen die größte Potentialdifferenz ermittelt, das in der Reihe von Kontaktmodulen letzte Kontaktmodul. Entsprechend ist erfindungsgemäß weiter vorgesehen, dass die zumindest eine Auswerteeinheit ausgebildet ist, aus der von zumindest einer der Spannungsmesseinrichtungen ermittelte Potentialdifferenz eine Position des jeweiligen Kontaktmoduls in der Reihe zu bestimmen.

An dem erfindungsgemäßen System ist vorteilhaft, dass alle CVMs gleichartig und vorzugsweise identisch aufgebaut sein können und dass diese weiter vorzugsweise keinen EEProm oder Mikrocontroller benötigen. Weiter kann die Position in der Reihe von Kontaktmodulen bestimmt werden, ohne dass das Brennstoffzellensystem aktiv ist, ohne dass also zwischen den Bipolarplatten eine Spannung anliegt.

Weiter kann auch vorgesehen sein, den Kontaktmodulen jeweils eine auf den ermittelten Positionen bzw. Potentialdifferenzen basierende Adresse zuzuweisen. Hierfür kann die Auswerteeinheit ausgebildet sein, zumindest einem Kontaktmodul eine auf der Position des Kontaktmoduls in der Reihe basierende Adresse zuzuordnen.

Als Energiequelle ist vorzugsweise eine Stromquelle zur konstanten Stromversorgung vorgesehen, welche die durch die Messwiderstände gebildete Widerstandsreihe beispielsweise mit 5 mA versorgt, sodass sich aus dem konstanten Strom und vorzugsweise bekannten Widerstandswerten der Messwiderstände vorbestimmte Potentialdifferenzen ergeben, welche von den Spannungsmesseinrichtungen erfassbar sind.

Aus den Potentialdifferenzen können zentral oder dezentral die Positionen der CVMs bestimmt werden.

Ein Kontaktmodul bzw. CVM kann beispielsweise aus der durch seine Spannungsmesseinrichtung ermittelten Potentialdifferenz, einem vorbekannten konstanten Strom und einem vorbekannten für alle Kontaktmodule gleichen Widerstandswert des Messwiderstands bestimmen, wie viele Kontaktmodule in der Reihe von Kontaktmodulen vor ihm angeordnet sind. Aus der Anzahl der vor ihm angeordneten Kontaktmodule kann das Kontaktmodul seine eigene Position in der Reihe bestimmen. Diese Bestimmung kann beispielsweise durch eine Berechnung mittels einer in dem Kontaktmodul hinterlegten Formel oder durch Vergleich mit in dem Kontaktmodul hinterlegten Daten erfolgen. Die Position des Kontaktmoduls kann dann an den Master übermittelt werden, welcher dann eine Adresse zuweisen kann. Alternativ kann die Adresse auch basierend auf der Position in dem Kontaktmodul zugeordnet werden, sodass anschließend die Adresse an den Master übermittelt werden kann.

Eine zentrale Bestimmung der Positionen ist möglich, wenn die Kontaktmodule die durch sie ermittelten Potentialdifferenzen mit einer zu den Kontaktmodulen gehörenden Kennung oder Adresse an den Master übermitteln und der Master durch Vergleich der Potentialdifferenzen miteinander die Reihenfolge bzw. die Position der Kontaktmodule entlang der Reihe von Kontaktmodulen bestimmt und die entsprechenden Adressen bzw. Kennungen entsprechend der Position speichert oder den Kontaktmodulen basierend auf den Positionen Adressen zuweist. Alternativ zu einem Vergleich der Potentialdifferenzen untereinander können diese auch mit vorbestimmten Spannungsebenen bzw. vorbestimmten Werten verglichen werden, welche beispielsweise in der Auswerteeinheit hinterlegt sind und eine Bestimmung der Reihenfolge bzw. Position ermöglichen.

Betrachtet man die in einer Reihe angeordneten und elektrisch in Reihe verbundenen Kontaktmodule, welche vorzugsweise gleichartig ausgerichtet sind, sodass also entlang der Reihe die Ermittlung der Potentialdifferenz durch die Spannungsmesseinrichtungen immer vor einem Messwiderstand oder immer nach einem Messwiderstand möglich ist, ist es unerheblich, ob die Steuereinheit mit einem ersten Kontaktmodul oder einem letzten Kontaktmodul der Reihe von Kontaktmodulen kontaktiert ist.

Soll die Position der Kontaktmodule vor einem Einbau dieser in ein Brennstoffzellensystem ermittelt werden, kann die Steuereinheit im Wesentlichen ausschließlich durch die Energiequelle gebildet sein und keine Steuerungsfunktion aufweisen.

Zur Definition der Reihenfolge ist vorzugsweise vorgesehen, dass der niedrigsten Potentialdifferenz dem Reihenanfang entspricht und das zugehörige Kontaktmodul entsprechend an erster Position sitzt. Weiter entspricht hierbei die größte Potentialdifferenz vorzugsweise dem Reihenende, sodass das zugehörigen Kontaktmodul entsprechend an letzter Position sitzt.

Eine vorteilhafte Weiterbildung des Systems sieht vor, dass die Kontaktmodule zur Spannungsmessung einer elektrischen Spannung zwischen den Bipolarplatten jeweils mit den Bipolarplatten einer Gruppe kontaktierbar sind.

Zur Spannungsmessung zwischen den Bipolarplatten weist jedes Kontaktmodul vorzugweise zumindest eine Messeinrichtung auf, wobei die Spannungsmesseinrichtung zur Messung der Potentialdifferenz zwischen der Messleitung und dem Bezugspotential sowie die Messeinrichtung zur Messung der Spannung zwischen den Bipolarplatten integral miteinander ausgebildet sein können. Insbesondere kann auch die Messeinrichtung zur Messung der Spannung zwischen den Bipolarplatten durch eine entsprechende Schaltung zugleich die Spannungsmesseinrichtung zur Messung der Potentialdifferenz zwischen der Messleitung und dem Bezugspotential sein.

Weiter weisen die Messwiderstände der Kontaktmodule vorzugsweise einen gleichen und/oder vorbestimmten Widerstandswert auf. Dieser kann natürlich einer durch die Herstellung bedingten Toleranz unterworfen sein.

Vorteilhaft ist, wenn das Bezugspotential ein Massenpotential ist. Wird das System zur Positionserkennung oder das Brennstoffzellensystem in einem Fahrzeug verwendet, handelt es sich bei dem Bezugspotential also vorzugsweise um eine Fahrzeugmasse.

Zur Kommunikation der Kontaktmodule mit der Steuereinheit ist vorzugsweise jedes Kontaktmodul über eine Datenleitung einen Datenaustausch ermöglichend mit der Steuereinheit verbunden. Dabei kann jedes Kontaktmodul jeweils über eine eigene Datenleitung oder mehrere bzw. alle Kontaktmodule über eine gemeinsame Datenleitung mit der Steuereinheit verbunden sein.

Weiter kann eine vorteilhafte Variante wie bereits erläutert vorsehen, dass das System genau eine Auswerteeinheit aufweist. Dabei kann die zentrale Steuereinheit zugleich die Auswerteinheit sein. Alternativ kann die zentrale Steuereinheit und die Auswerteeinheit auch integral miteinander ausgebildet sein. Zudem ist die Auswerteeinheit bei dieser Variante ausgebildet, aus den von den Spannungsmesseinrichtungen ermittelten und von den Kontaktmodulen über die Datenleitung an die Auswerteinheit übermittelten Potentialdifferenzen die Positionen der Kontaktmodule in der Reihe zu bestimmen.

Wurde die Reihenfolge durch die Auswerteeinheit bestimmt, kann diese ferner ausgebildet sein, den Kontaktmodulen eine auf ihrer jeweiligen Position in der Reihe basierende Adresse zuzuordnen.

Entsprechend kann die Auswerteeinheit hierfür ausgebildet sein, die Potentialdifferenzen miteinander zu vergleichen und aus dem Vergleich die Positionen der Kontaktmodule in der Reihe von Kontaktmodulen zu bestimmen.

Alternativ zu einer einzelnen und insbesondere mit der zentralen Steuereinheit vorgesehenen Auswerteeinheit kann das System je Kontaktmodul eine Auswerteeinheit aufweisen. Diese Auswerteeinheit kann an und insbesondere integral mit dem jeweiligen Kontaktmodul ausgebildet sein. Ist je Kontaktmodul eine Auswerteinheit vorgesehen, sind diese jeweils ausgebildet, aus den von der Spannungsmesseinrichtung des zugehörigen Kontaktmoduls ermittelten Potentialdifferenz die Positionen des jeweiligen Kontaktmoduls in der Reihe zu bestimmen.

Auch hierbei kann die Auswerteeinheit ferner ausgebildet sein, den Kontaktmodulen eine auf ihrer jeweiligen Position in der Reihe basierende Adresse zuzuordnen.

Unabhängig von einer einzelnen Auswerteinheit oder einer Auswerteeinheit je Kontaktmodul kann die Auswerteeinheit gemäß einer vorteilhaften Weiterbildung ausgebildet sein, eine zu einem Kontaktmodul gehörende Potentialdifferenz mit vorbekannten und in der Auswerteeinheit hinterlegten Potentialdifferenzen zu vergleichen und aus dem Vergleich die Positionen des Kontaktmoduls in der Reihe von Kontaktmodulen zu bestimmen.

Ist eine einzelne Auswerteinheit oder auch je Kontaktmodul eine Auswerteinheit vorgesehen, kann dieses auch ausgebildet sein die Position der Kontaktmodule oder des jeweiligen Kontaktmoduls mittels einer vorbekannten und in dem Kontaktmodul bzw. den Kontaktmodulen hinterlegten Formel zu bestimmen.

Unabhängig davon, durch welche Methode die Positionen bestimmt werden, kann es durch die Reihenfolge der Messwiderstände und Spannungsmesseinrichtungen dazu kommen, dass für ein erstes und ein letztes Kontaktmodul der Reihe unterschiedliche Potentialdifferenzen ermittelt werden. Folgt beispielsweise auf die Spannungsmesseinrichtung des letzten CVMs kein Messwiderstand mehr, wird eine Potentialdifferenz von 0 V ermittelt. Folgt auf die Spannungsmesseinrichtung des letzten CVMs ein Messwiderstand, wird eine Potentialdifferenz größer 0 V ermittelt. Das hat jedoch keine Auswirkung auf die Positionsbestimmung, da die relativen Positionen zueinander sowie darauf basierend vergebene Adressen weiterhin korrekt sind.

Zur Lösung dieses Problems kann die Position beispielsweise ausgehend von Position 0 bestimmt werden. Bei beispielsweise drei in Reihe geschalteten CVMs hätten diese somit die Positionen 0, 1, 2 oder 1, 2, 3 abhängig von der gleichartigen Ausrichtung und der Anordnung der zentralen Steuereinheit an der Reihe.

Vorzugsweise ist vorgesehen, dass die Messleitung einen ersten Leitungsabschnitt und einen zweiten Leitungsabschnitt aufweist, welcher mit dem Bezugspotential verbunden ist. Die Messwiderstände sind entlang dem ersten Leitungsabschnitt in Reihe miteinander verbunden. Die Spannungsmesseinrichtungen sind jeweils ausgebildet, die Potentialdifferenz zwischen dem ersten Leitungsabschnitt im Bereich des jeweiligen Kontaktmoduls und dem Bezugspotential und/oder dem zweiten Leitungsabschnitt zu ermitteln.

Dabei sind die Spannungsmesseinrichtungen ferner vorzugsweise ausgebildet, die Potentialdifferenz in jedem Kontaktmodul jeweils vor oder nach dem jeweiligen Messwiderstand zu ermitteln, sodass also zwischen zwei Spannungsmesseinrichtungen immer ein Messwiderstand oder zwischen zwei Messwiderständen immer eine Spannungsmesseinrichtung angeordnet ist.

Weiter weisen die Kontaktmodule gemäß einer vorteilhaften Variante jeweils einen ersten Eingang und einen ersten Ausgang auf, welche über den jeweiligen Messwiderstand verbunden sind, sodass die Kontaktmodule untereinander jeweils von einem ersten Ausgang eines Kontaktmoduls zu einem ersten Eingang eines in der Reihe nachfolgenden Kontaktmoduls beispielsweise entlang des ersten Leitungsabschnitts in Reihe verbindbar sind.

Zudem können die Kontaktmodule jeweils einen zweiten Eingang und einen zweiten Ausgang aufweisen, welche miteinander elektrisch verbunden sind, sodass die Kontaktmodule untereinander jeweils von einem zweiten Ausgang eines Kontaktmoduls zu einem zweiten Eingang eines nachfolgenden Kontaktmoduls beispielsweise entlang des zweiten Leitungsabschnitts verbindbar sind.

Sind ein erster und zweiter Eingang sowie ein erster und zweiter Ausgang vorgesehen, ist vorzugsweise ferner vorgesehen, dass der erste Eingang eines in der Reihe von Kontaktmodulen ersten Kontaktmoduls mit einem von der Energiequelle bereitgestellten Potential (+ Pol) und der zweite Eingang eines in der Reihe von Kontaktmodulen ersten Kontaktmoduls mit dem Bezugspotential (- Pol) der Energiequelle verbunden sind. Alternativ oder zusätzlich kann der erste Ausgang eines in der Reihe von Kontaktmodulen letzten Kontaktmoduls mit dem zweiten Ausgang des in der Reihe von Kontaktmodulen letzten Kontaktmoduls verbunden sein. Dabei werden also insbesondere der erste Leitungsabschnitt und der zweite Leitungsabschnitt durch die Verbindung des ersten Ausgangs mit dem zweiten Ausgang des letzten Moduls miteinander elektrisch verbunden.

Ein weiterer Aspekt der Erfindung betrifft ein Brennstoffzellensystem mit einer Vielzahl von zu Gruppen gruppierten Bipolarplatten und einem erfindungsgemäßen System zur Positionserkennung einer Vielzahl von Kontaktmodulen. Dabei sind die Kontaktmodule jeweils mit den Bipolarplatten einer Gruppe kontaktiert.

Neben dem System zur Positionsbestimmung und dem Brennstoffzellensystem mit einem solchen System zur Positionsbestimmung betrifft ein weiterer Aspekt der Erfindung ein Verfahren zur Positionserkennung einer Vielzahl von Kontaktmodulen zur Kontaktierung einer Vielzahl von zu Gruppen gruppierten Bipolarplatten eines Brennstoffzellensystems mit einem erfindungsgemäßen System. Bei dem Verfahren ist vorgesehen, dass die Spannungsmesseinrichtungen jeweils eine Potentialdifferenz zwischen der Messleitung im Bereich des jeweiligen Kontaktmoduls und dem Bezugspotential ermittelt und die zumindest eine Auswerteeinheit aus der von zumindest einer der Spannungsmesseinrichtungen ermittelten Potentialdifferenz eine Position des jeweiligen Kontaktmoduls in der Reihe von Kontaktmodulen bestimmt.

Anschließend kann die zumindest eine Auswerteinheit zumindest einem Kontaktmodul eine auf seiner Position basierende Adresse zuweisen oder zuordnen.

Vorteilhaft ist auch, dass ausgehend von einer größten Potentialdifferenz ermittelt werden kann, ob alle vorhergehenden Positionen erfasst wurden. Sind die Messwiderstände bzw. deren Widerstandswert bekannt, kann von der größten Potentialdifferenz zurückgerechnet werden, wie viele Messwiderstände und entsprechend wie viele Kontaktmodule in der Reihe vor dem Kontaktmodul, an welchem die größte Potentialdifferenz erfasst wurde, angeordnet sind, sodass dadurch ausgelesen werden kann, ob deren Position bestimmt und diese ggfs. adressiert wurden.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine erste Variante eines Systems zur Positionserkennung einer Vielzahl von Kontaktmodulen;
- Fig. 2: eine zweite Variante eines Systems zur Positionserkennung einer Vielzahl von Kontaktmodulen;
- Fig. 3: eine dritte Variante eines Systems zur Positionserkennung einer Vielzahl von Kontaktmodulen;
- Fig. 4: ein vereinfachter Ablauf eines Verfahrens zur Positionserkennung einer Vielzahl von Kontaktmodulen.

Die Figuren sind beispielhaft schematisch. Gleiche Bezugszeichen in den Figuren weisen auf gleiche funktionale und/oder strukturelle Merkmale hin.

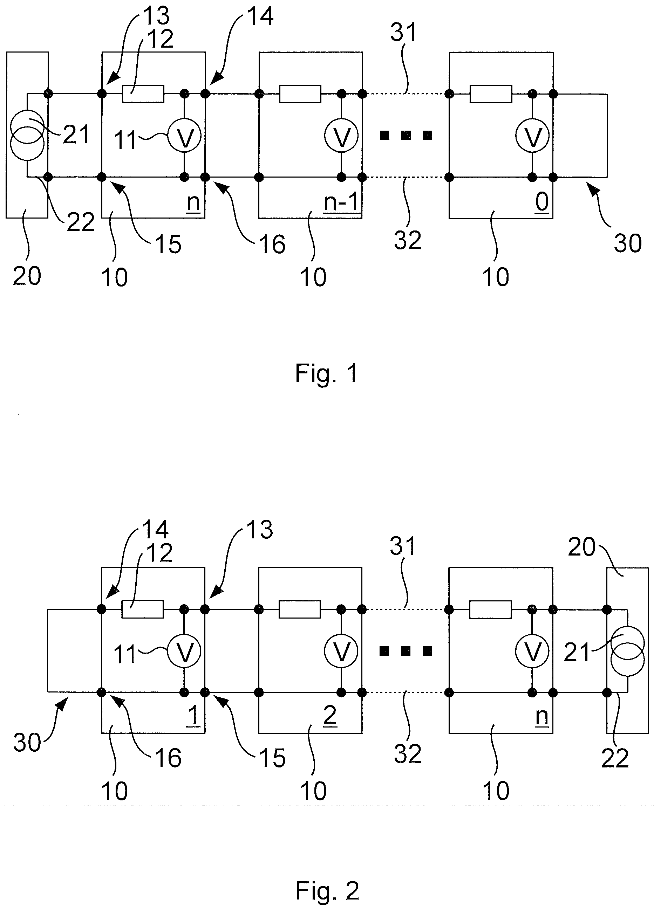

In Figur 1 ist eine erste Variante eines Systems zur Positionserkennung einer Vielzahl von Kontaktmodulen (CVMs) 10 gezeigt.

Jedes der gleicharteigen Kontaktmodule 10 weist einen Messwiderstand 12 und eine Spannungsmessvorrichtung 11 auf. Weiter weist das System eine zentrale Steuereinheit 20 mit einer vorzugsweise als Stromquelle ausgebildeten Energiequelle 21 auf. Die Messwiderstände 12 sind elektrisch in Reihe mit der Energiequelle 21 verbunden, sodass auch die Kontaktmodule 10 entlang einer Messleitung 30 bzw. entlang eines ersten Leitungsabschnitts 31 in Reihe miteinander verbunden sind. Die Kontaktmodule 10 bilden dadurch eine Reihe von miteinander verbundenen Kontaktmodule 10.

Die Spannungsmessvorrichtungen 11 sind jeweils ausgebildet die Potentialdifferenz zwischen der Messleitung 30 im Bereich des jeweiligen Kontaktmoduls 10 und einem Bezugspotential 22 der Energiequelle 21 zu messen, sodass also aufgrund des gleichartigen Aufbaus der Kontaktmodule 10 und der gleichartigen Ausrichtung der Kontaktmodule 10 an jeder Spannungsmesseinrichtung 11 des Systems eine andere Potentialdifferenz ermittelbar ist, welche entsprechend die Position des jeweiligen Kontaktmoduls 10 in der Reihe von Kontaktmodulen 10 wiederspiegelt.

Vorliegend weist das dargestellte System n+1 Kontaktmodule 10 auf. Beispielhaft sind die Kontaktmodule 10 der Positionen 0, n-1 und n dargestellt. Dabei ist zu beachten, dass die Positionszählung bei der Variante gemäß Figur 1 mit der Position 0 beginnt, da die kleinste Potentialdifferenz, welche von der Spannungsmessvorrichtung 11 des Oten Kontaktmoduls 10 ermittelt wird, aufgrund der Ausrichtung der Kontaktmodule 10 gleich 0 V ist. Wären die Kontaktmodule gespiegelt angeordnet, sodass also die Messung der Potentialdifferenz der Spannungsmessvorrichtung 11 des Oten CVM 10 über den Messwiderstand 12 des Oten CVM 10 erfolgt, beginnt die Positionszählung mit 1 und das System umfasst n Kontaktmodule.

Eine jeweils ermittelte Potentialdifferenz eines Kontaktmoduls 10 kann zentral und beispielsweise durch eine einzelne Auswerteeinheit mit den anderen Potentialdifferenzen der anderen Kontaktmodule 10 verglichen werden, um durch den Vergleich die Reihenfolge der Kontaktmodule 10 zu bestimmen.

Alternativ kann eine jeweils ermittelte Potentialdifferenz dezentral durch jeweils eine Auswerteeinheit je Kontaktmodul 10 mit einer Formel verrechnet oder mit vorbestimmten Spannungswerten verglichen werden, um eine Position eines jeweiligen Kontaktmoduls 10 in einer Reihe zu bestimmen.

Vorteilhaft dabei ist, dass ein Brennstoffzellensystem für welches das System vorgesehen oder in welchem das System verbaut ist, noch nicht in Betrieb sein muss und zwischen den Bipolarplatten keine Spannung anliegen muss.

In Figur 2 ist eine Reihe von Kontaktmodulen 10 wie in Figur 1 dargestellt, wobei die Steuereinheit 20 an einer gegenüberliegenden Seite der Reihe angeschlossen ist. Wie in Figur 1 ist der erste Leitungsabschnitt 31 an einem von der Steuereinheit 20 angewandten Ende der Reihe von Kontaktmodulen mit dem zweiten Leitungsabschnitt 32 gebrückt.

Da die kleinste Spannung vorliegend über einen Messwiderstand 12 gemessen wird und daher nicht gleich 0 V ist, beginnt die Positionszählung mit 1, sodass das in Figur 2 dargestellte System n Positionen aufweist.

Sowohl für das System gemäß Figur 1 als auch gemäß Figur 2 gilt, dass die Kontaktmodule 10 entlang des ersten Leitungsabschnitts 31 verbunden sind, indem der erste Ausgang 14 eines Kontaktmoduls 10 jeweils mit dem ersten Eingang 13 eines in der Reihe nachfolgenden Kontaktmoduls 10 verbunden ist, und entlang des zweiten Leitungsabschnitts 32 verbunden sind, indem der zweite Ausgang 16 eines Kontaktmoduls 10 jeweils mit dem zweiten Eingang 15 eines in der Reihe nachfolgenden Kontaktmoduls 10 verbunden sind. Weiter sind der erste Ausgang 14 und der zweite Ausgang 16 des Kontaktmoduls 10 mit der kleinsten Position in der Reihe gebrückt und der erste Eingang 13 und der zweite Eingang 15 des in der Reihe entsprechend der Position letzten Kontaktmoduls 10 mit der Energiequelle 21 der Steuereinheit 20 verbunden.

Vorliegend stellt die Energiequelle 21 ein Bezugspotential 22 bereit, welches jedoch auch einem Masseanschluss entsprechen kann, sodass es sich um ein Massepotential handeln kann. Ist das Bezugspotential 22 das Massepotential, können die Kontaktmodule 10 ausschließlich oder zusätzlich über einen Masseanschluss mit dem Massepotential verbunden sein.

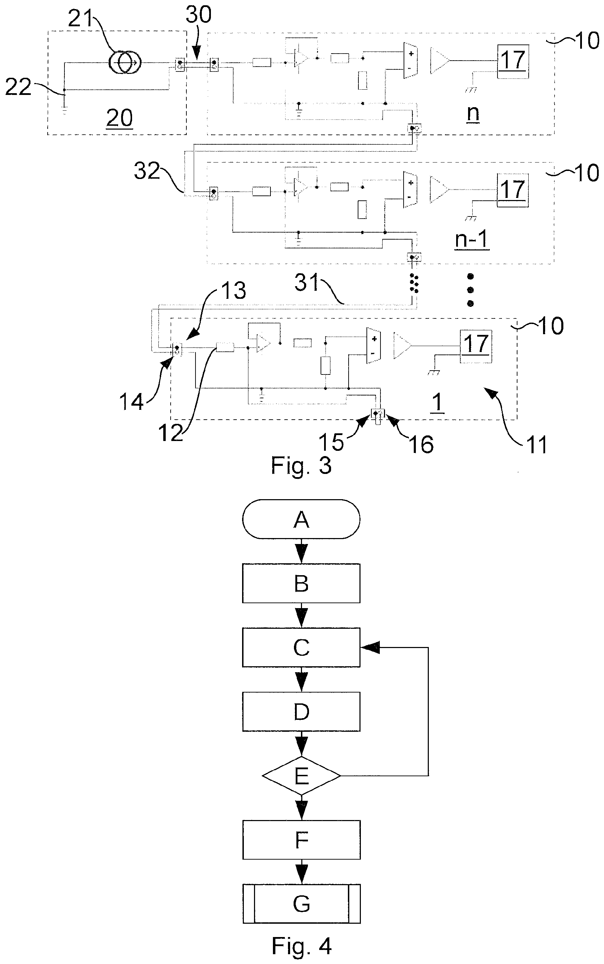

Figur 3 zeigt ein System mit einem Aufbau analog zu dem System entsprechend Figur 1, wobei das Bezugspotential 22 ein Massepotential ist und jedes Kontaktmodul 10 sowohl über den zweiten Leitungsabschnitt 32 als auch über einen Masseanschluss mit dem Massepotential bzw. dem Bezugspotential 22 verbunden ist.

Weiter ist in Figur 3 vorgesehen, dass jedes Kontaktmodul 10 jeweils über eine Auswerteeinheit 17 verfügt, welche die von der jeweiligen Spannungsmesseinrichtung 11 ermittelte Potentialdifferenz auswertet und eine Position des jeweiligen Kontaktmoduls 10 in der Reihe von Kontaktmodulen 10 ermittelt.

Weiter ist in Figur 3 vorgesehen, dass die Auswerteeinheiten 17 über eine symbolisch dargestellte Antenne drahtlos mit einem Empfänger verbunden sind, wobei der Empfänger eine andere Auswerteinheit 17 und/oder die Steuereinheit 20 und/oder eine externe Steuerung sein kann, sodass die ermittelte Position und/oder eine darauf basierend vergebene Adresse an den Empfänger übermittelt werden kann.

Figur 4 stellt schematisch und vereinfacht einen möglichen Ablauf bei dem Verfahren zur Ermittlung der Positionen der Kontaktmodule 10 dar. Die Schritte dabei sind die folgenden:
A Start des Ablaufs
B Anschalten der Energiequelle 21 zur Stromversorgung der Reihe von Kontaktmodulen 10
C Ermitteln der Potentialdifferenz jedes Kontaktmoduls 10
D Abspeichern einer jeweiligen Potentialdifferenz mit einer auf der Potentialdifferenz basierenden Adresse
E Wurde für alle Kontaktmodule 10 der Reihe mit einer Potentialdifferenz kleiner der größten Potentialdifferenz die Potentialdifferenz ermittelt und mit der zugehörigen Adresse abgespeichert? Falls ja, dann zu Schritt F, falls nein, dann zu Schritt C
F Abschalten der Energiequelle 21
G Ende des Ablaufs

## Patentansprüche

1. System zur Positionserkennung einer Vielzahl von Kontaktmodulen (10) zur Kontaktierung einer Vielzahl von zu Gruppen gruppierten Bipolarplatten eines Brennstoffzellensystems,
wobei das System die Vielzahl von Kontaktmodulen (10), eine zentrale Steuereinheit (20) und zumindest eine Auswerteeinheit aufweist,
**dadurch gekennzeichnet, dass** die Kontaktmodule (10) jeweils eine Spannungsmesseinrichtung (11) und einen Messwiderstand (12) aufweisen,
die Steuereinheit (20) eine elektrische Energiequelle (21) mit einem Bezugspotential (22) aufweist,
die Kontaktmodule (10) mit ihren Messwiederständen (12) entlang einer Messleitung (30) in Reihe mit der Energiequelle (21) geschalten sind und eine Reihe von miteinander elektrisch verbundenen Kontaktmodulen (10) bilden
und die Spannungsmesseinrichtungen (11) jeweils ausgebildet sind, eine Potentialdifferenz zwischen der Messleitung (30) im Bereich des jeweiligen Kontaktmoduls (10) und dem Bezugspotential (22) zu ermitteln, welche zu der Position des jeweiligen Kontaktmoduls (10) in der Reihe von Kontaktmodulen (10) korreliert,
und wobei die zumindest eine Auswerteeinheit ausgebildet ist, aus der von zumindest einer der Spannungsmesseinrichtungen (11) ermittelte Potentialdifferenz eine Position des jeweiligen Kontaktmoduls (10) in der Reihe zu bestimmen.

2. System nach Anspruch 1,
wobei die Kontaktmodule (10) zur Spannungsmessung einer elektrischen Spannung zwischen den Bipolarplatten jeweils mit den Bipolarplatten einer Gruppe kontaktierbar sind.

3. System nach Anspruch 1 oder 2,
wobei die Messwiderstände (12) der Kontaktmodule einen gleichen und/oder vorbestimmten Widerstandswert aufweisen.

4. System nach einem der vorhergehenden Ansprüche,
wobei das Bezugspotential (22) ein Massenpotential ist.

5. System nach einem der vorhergehenden Ansprüche,
wobei jedes Kontaktmodul (10) über eine Datenleitung einen Datenaustausch ermöglichend mit der Steuereinheit (20) verbunden ist.

6. System nach dem vorhergehenden Anspruch,
wobei das System genau eine Auswerteeinheit aufweist und insbesondere die zentrale Steuereinheit (20) die Auswerteinheit ist oder die zentrale Steuereinheit (20) und die Auswerteeinheit integral miteinander ausgebildet sind,
und wobei die Auswerteeinheit ausgebildet ist, aus den von den Spannungsmesseinrichtungen (11) ermittelten und von den Kontaktmodulen (10) über die Datenleitung an die Auswerteinheit übermittelten Potentialdifferenzen die Positionen der Kontaktmodule(10) in der Reihe zu bestimmen.

7. System nach dem vorhergehenden Anspruch,
wobei die Auswerteeinheit ausgebildet ist, die Potentialdifferenzen miteinander zu vergleichen und aus dem Vergleich die Positionen der Kontaktmodule (10) in der Reihe von Kontaktmodulen (10) zu bestimmen.

8. System nach einem der Ansprüche 1 bis 5,
wobei das System je Kontaktmodul (10) eine Auswerteeinheit aufweist, welche insbesondere integral mit dem jeweiligen Kontaktmodul (10) ausgebildet sind,
und wobei die Auswerteeinheiten jeweils ausgebildet sind, aus den von der Spannungsmesseinrichtung (11) des zugehörigen Kontaktmoduls (10) ermittelten Potentialdifferenz die Positionen des jeweiligen Kontaktmoduls (10) in der Reihe zu bestimmen.

9. System nach einem der vorhergehenden Ansprüche,
wobei die Auswerteeinheit ausgebildet ist, eine zu einem Kontaktmodul (10) gehörende Potentialdifferenz mit vorbekannten und in der Auswerteeinheit hinterlegten Potentialdifferenzen zu vergleichen und aus dem Vergleich die Positionen des Kontaktmoduls (10) in der Reihe von Kontaktmodulen (10) zu bestimmen.

10. System nach einem der vorhergehenden Ansprüche,
wobei die Messleitung (30) einen ersten Leitungsabschnitt (31) und einen zweiten Leitungsabschnitt (32) aufweist, welcher mit dem Bezugspotential (22) verbunden ist,
wobei die Messwiderstände (12) entlang dem ersten Leitungsabschnitt (31) in Reihe miteinander verbunden sind und die Spannungsmesseinrichtungen (11)jeweils ausgebildet sind, die Potentialdifferenz zwischen dem ersten Leitungsabschnitt (31) im Bereich des jeweiligen Kontaktmoduls (10) und dem Bezugspotential und/oder dem zweiten Leitungsabschnitt (32) zu ermitteln.

11. System nach einem der vorhergehenden Ansprüche,
wobei die Kontaktmodule (10) jeweils einen ersten Eingang (13) und einen ersten Ausgang (14) aufweisen, welche über den jeweiligen Messwiderstand (12) verbunden sind, sodass die Kontaktmodule (10) untereinander jeweils von einem ersten Ausgang (14) eines Kontaktmoduls (10) zu einem ersten Eingang (13) eines in der Reihe nachfolgenden Kontaktmoduls (10) in Reihe verbindbar sind.

12. System nach einem der vorhergehenden Ansprüche,
wobei die Kontaktmodule (10) jeweils einen zweiten Eingang (15) und einen zweiten Ausgang (16) aufweisen, welche miteinander elektrisch verbunden sind, sodass die Kontaktmodule (10) untereinander jeweils von einem zweiten Ausgang (16) eines Kontaktmoduls (10) zu einem zweiten Eingang (15) eines nachfolgenden Kontaktmoduls (10) verbindbar sind.

13. System nach einem den beiden vorhergehenden Ansprüchen,
wobei der erste Eingang (13) eines in der Reihe von Kontaktmodulen (10) ersten Kontaktmoduls (10) mit einem von der Energiequelle (21) bereitgestellten Potential und der zweite Eingang (15) eines in der Reihe von Kontaktmodulen (10) ersten Kontaktmoduls (10) mit dem Bezugspotential (22) der Energiequelle (21) verbunden sind
und/oder wobei der erste Ausgang (14) eines in der Reihe von Kontaktmodulen (10) letzten Kontaktmoduls (10) mit dem zweiten Ausgang (16) des in der Reihe von Kontaktmodulen (10) letzten Kontaktmoduls (10) verbunden ist.

14. Brennstoffzellensystem mit einer Vielzahl von zu Gruppen gruppierten Bipolarplatten und einem System zur Positionserkennung einer Vielzahl von Kontaktmodulen (10) nach einem der vorhergehenden Ansprüche, wobei die Kontaktmodule (10) jeweils mit den Bipolarplatten einer Gruppe kontaktiert sind.

15. Verfahren zur Positionserkennung einer Vielzahl von Kontaktmodulen (10) zur Kontaktierung einer Vielzahl von zu Gruppen gruppierten Bipolarplatten eines Brennstoffzellensystems mit einem System nach einem der vorhergehenden Ansprüche 1 bis 13,
wobei die Spannungsmesseinrichtungen (11)jeweils eine Potentialdifferenz zwischen der Messleitung (30) im Bereich des jeweiligen Kontaktmoduls (10) und dem Bezugspotential (22) ermittelt,
und wobei die zumindest eine Auswerteeinheit aus der von zumindest einer der Spannungsmesseinrichtungen (11) ermittelten Potentialdifferenz eine Position des jeweiligen Kontaktmoduls (10) in der Reihe von Kontaktmodulen (10) bestimmt.
